# DEMANDE DE BREVET EUROPEEN

(11) **EP 3 333 478 A1**
(43) Date de publication de la demande: **13.06.2018**
(21) Numéro de dépôt: 18153022.1
(22) Date de dépôt: 02.02.2015
(51) Int. Cl.: F21S 41/19, F21S 41/147, F21S 41/39, F21S 41/675, F21S 43/14, F21S 43/241, F21S 43/247

(54) **MODULE D'ECLAIRAGE ET/OU DE SIGNALISATION ROTATIF A SOURCE LUMINEUSE FIXE**

(30) Priorité: 04.02.2014 FR 1400322
(62) Demande divisionnaire de: 15153497.1
(71) Demandeur: Valeo Vision, 93012 Bobigny Cedex (FR)
(72) Inventeur: DUBOSC, Christophe, 93012 BOBIGNY (FR); REISS, Benoit, 93012 BOBIGNY Cedex (FR); DE LAMBERTERIE, Antoine, 93012 BOBIGNY Cedex (FR); THABET, Ziyed, 93012 BOBIGNY Cedex (FR); SOMMERSCHUH, Stephan, 93012 BOBIGNY Cedex (FR); ELHACHIR, Brahim, 93012 BOBIGNY Cedex (FR)
(74) Mandataire: Valeo Vision

(57) **Abrégé**

La présente invention concerne un module d'éclairage et/ou de signalisation (10; 100) notamment pour véhicule automobile, comprenant :
- au moins une source lumineuse (26) ;
- au moins un réflecteur (18).
Selon l'invention,
- le réflecteur (18) est mobile en rotation sous l'effet d'un actionneur (12), et
- la source lumineuse (26) est fixe par rapport à l'actionneur (12).

## Description

L'invention a trait au domaine de l'éclairage et/ou de la signalisation, notamment pour véhicules automobiles. Plus particulièrement, l'invention a trait à un module d'éclairage et/ou de signalisation pour véhicule automobile, ainsi qu'à un projecteur comprenant un tel module.

Le document FR 2 817 212 décrit un projecteur de véhicule automobile avec une fonction d'éclairage directionnel plus connu sous l'acronyme DBL (Dynamic Bending Light). Le projecteur comprend un système optique dont la direction d'éclairage est modifiée par rotation, un arbre de sortie couplé au système optique afin que celui-ci soit entraîné, un moteur, et un mécanisme de transmission de rotation couplé au moteur afin qu'il transmette la rotation du moteur à l'arbre de sortie, dans lequel le moteur, l'arbre de sortie et le mécanisme de transmission de rotation sont placés dans un corps de boîtier, et un arbre rotatif du moteur est supporté par le corps de boîtier. Un arbre de support d'un pignon intermédiaire placé entre le moteur et l'arbre de sortie est directement supporté par le corps de boîtier.

Le document EP 1 285 812 décrit un projecteur comportant un ensemble mobile muni d'un réflecteur et d'une source lumineuse, et un ensemble fixe bordant au moins partiellement l'ensemble mobile qui peut tourner, relativement à l'ensemble fixe, autour d'un premier axe vertical pour un réglage en azimut, et autour d'un axe transversal horizontal pour un réglage en site. Une telle disposition a pour but de garder les jeux de fonctionnement constants entre les pièces fixes et les pièces mobiles.

Le document EP 1 985 913 divulgue un projecteur avant d'un véhicule automobile dont le module optique est monté sur un portique et est susceptible de tourner autour d'un axe de rotation vertical en vue d'assurer une fonction directionnelle (DBL). Le module optique est conçu pour produire un faisceau lumineux projeté vers l'avant au travers d'une surface active d'un dioptre. Cette surface active est la surface minimale nécessaire pour produire un faisceau lumineux d'éclairage réglementaire. Un masque est également prévu pour modifier l'aire de la surface active, ce qui permet au projecteur de proposer les fonctions d'éclairage de nuit ou de jour dans le cas d'une ouverture intégrale ou partielle du masque. Si le masque est conçu avec un logo ou une figure, une fonction de signalisation de stationnement est également proposée. Le projecteur de cet enseignement est ainsi limité à deux fonctions d'éclairage.

Le document EP 2 423 047 décrit un projecteur d'un véhicule automobile conçu pour réunir la fonction d'éclairage de nuit avec la fonction de signalisation de jour connue sous l'acronyme anglais DRL (Daytime Running Light). L'éclairage de nuit est obtenu par un module d'éclairage fixe, tandis que l'éclairage de type DRL est réalisé au moyen d'un réseau de diodes électroluminescentes pouvant être escamoté dans une position interne au projecteur.

L'invention a pour objectif de proposer un module et un projecteur d'éclairage et/ou de signalisation apte à assurer au moins deux fonctions d'éclairage et/ou de signalisation et de construction simple et compacte.

Dans ce but, l'invention a pour objet un module d'éclairage et/ou de signalisation pour véhicule automobile, comprenant au moins une source lumineuse et au moins un réflecteur. Selon l'invention le réflecteur est mobile sous l'effet d'un actionneur, et la source lumineuse est fixe par rapport à l'actionneur.

En outre l'invention possède les caractéristiques suivantes, considérées isolément ou en combinaison :
- le réflecteur est mobile en rotation autour d'un axe,
- l'axe est sensiblement vertical,
- le réflecteur et la source lumineuse coopèrent pour remplir une fonction d'éclairage et/ou de signalisation réglementaire,
- la source lumineuse est sensiblement alignée avec l'axe,
- le réflecteur est formé sur une face d'un support solidaire de l'axe,
- le support comporte au moins une deuxième face remplissant une deuxième fonction,
- la deuxième fonction est une fonction d'éclairage et/ou de signalisation réglementaire,
- la deuxième fonction est une fonction d'aspect,
- le module comprend au moins une deuxième source lumineuse,
- la deuxième source lumineuse coopère avec au moins un guide de lumière,
- la deuxième source lumineuse coopère avec au moins une face du support,
- la deuxième source lumineuse est fixe par rapport à la première source lumineuse,
- le guide en nappe est solidaire du support,
- le guide de lumière est constitué par un guide en nappe dont la partie périphérique renvoie la lumière de la deuxième source pour remplir une fonction de signal,
- le guide en nappe est fixe par rapport à la source lumineuse,
- le guide de lumière est constitué par un guide en nappe dont la partie périphérique renvoie la lumière de la deuxième source lumineuse pour remplir une fonction de signal,
- la source lumineuse est constituée par une diode électroluminescente (LED),
- la deuxième source lumineuse est constituée par une diode électroluminescente (LED).

L'invention a aussi pour objet un projecteur d'éclairage et/ou de signalisation pour véhicule automobile, comprenant un boîtier et au moins un module d'éclairage et/ou de signalisation possédant les caractéristiques énoncées plus haut.

D'autres caractéristiques et avantages de la présente invention apparaitront plus clairement à l'aide de la description et des dessins parmi lesquels :
- la figure 1 est une illustration en perspective isométrique d'un mode de réalisation préféré d'un module d'éclairage et/ou de signalisation conforme à la présente invention, le dispositif étant dans une première configuration ;
- la figure 2 est une illustration en perspective isométrique du module d'éclairage et de signalisation de la figure 1, le dispositif étant dans une deuxième configuration ;
- la figure 3 est une vue de côté du module d'éclairage et/ou de signalisation de la figure 1 ;
- la figure 4 est une vue de côté du module d'éclairage et/ou de signalisation de la figure 2 ;
- la figure 5 est une illustration en perspective isométrique d'une variante de réalisation d'un module d'éclairage et/ou de signalisation conforme à l'invention, le dispositif étant dans une première configuration ;
- la figure 6 est une illustration en perspective isométrique du module d'éclairage et de signalisation de la figure 5, le dispositif étant dans une deuxième configuration.

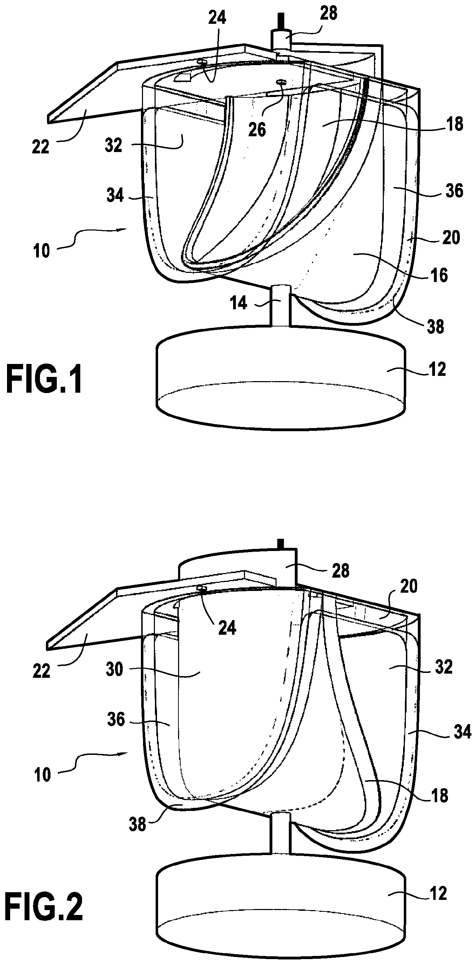

Les figures 1 à 4 illustrent le principe de l'invention et correspondent à un mode de réalisation préféré. Elles illustrent de manière schématique un module d'éclairage et/ou de signalisation 10, fixé dans un boitier (non représenté) d'un projecteur, comprenant un actionneur 12 solidaire du boitier, un axe 14 entrainé en rotation par l'actionneur 12 et solidaire d'un support 16.

L'actionneur 12 comprend un moteur électrique et des moyens de transmission en rotation entre le moteur et l'axe 14. L'axe 14 soutient de préférence le support 16 en sa partie inférieure. Dans le mode de réalisation représenté, l'axe 14 est sensiblement vertical, mais il pourrait avoir une autre orientation. On entend par « sensiblement » que l'axe 14 peut former un angle avec la verticale d'au plus 20°.

Le support 16 du module 10 comprend une première face réfléchissante 18 assurant une fonction d'éclairage et/ou de signalisation réglementaire. Cette fonction est remplie par la coopération de la face 18 avec une source lumineuse 26. Cette dernière est fixée et positionnée sur un circuit imprimé 22, lui-même fixé dans le boitier (non représenté) du projecteur. La source lumineuse 26 est fixe par rapport à l'actionneur. On entend par « réglementaire » le fait qu'une fonction d'éclairage et/ou de signalisation est conforme à la réglementation en vigueur.

Cette fonction d'éclairage et/ou de signalisation réglementaire peut être une fonction de signalisation de jour, communément désigné par l'appellation DRL (de l'acronyme anglo-saxon « Daytime Running Light »), une fonction de croisement, communément désignée « code », une fonction communément désignée « route ». La face 18 assure ainsi la formation d'un faisceau d'éclairage et/ou de signalisation réglementaire dirigé vers l'avant du véhicule.

Le support 16 du module 10 comprend également une deuxième face 30 assurant une deuxième fonction. Cette deuxième fonction peut être soit une fonction de signalisation de jour réglementaire, soit une fonction d'éclairage de croisement et/ou de route réglementaire, soit une fonction d'aspect.

Le support 16 du module 10 comprend éventuellement plus de deux faces assurant chacune une fonction d'éclairage et/ou de signalisation réglementaire, ou une fonction d'aspect. Dans le mode de réalisation représenté, le support 16 a une forme prismatique mais il pourrait avoir une autre forme.

Le module 10 comprend en outre un guide de lumière 20 coopérant avec une seconde source lumineuse 24 assurant ainsi une fonction de signalisation réglementaire. La source lumineuse 24 est fixée et positionnée sur le circuit imprimé 22. Elle est donc fixe par rapport à la première source lumineuse 26. Elle peut être constituée d'une ou plusieurs diodes électroluminescentes (LED).

Le guide de lumière 20 dans l'exemple comporte deux faces 32 et 36, chacune présentant un bord 34 et 38 respectivement. Le guide de lumière 20 est de préférence un guide de lumière en nappe. Dans un mode de réalisation préféré, la partie périphérique 34 ou 38 de la face 32 ou 36 à l'aplomb de la deuxième source lumineuse 24 du guide en nappe renvoie la lumière de la deuxième source 24 vers l'avant du véhicule pour remplir une fonction de signalisation et/ou vers l'arrière pour participer à la fonction d'aspect.

La fonction d'aspect de la face 30 du support 16 peut ainsi être accompagnée de la fonction de signalisation fournie par le guide de lumière 20.

De préférence, comme représenté sur les figures 1 à 4, le module 10 comprend un pivot supérieur 28 colinéaire avec l'axe 14 par l'intermédiaire du support 16 pour accroître la précision du positionnement relatif de la source lumineuse 26 par rapport au réflecteur 18, ainsi que la précision du positionnement relatif de la source lumineuse 24 par rapport aux faces 32 et 36 du guide de lumière 20.

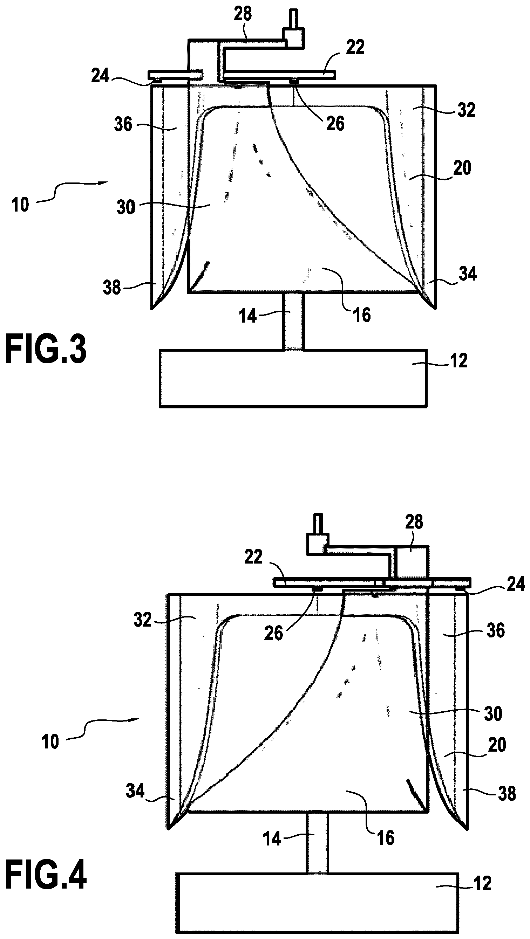

Dans un mode préféré de réalisation représenté sur les figures 1 et 3, le guide en nappe a deux faces 32 et 36 de même que le support a deux faces 18 et 30, chacune des faces du guide de lumière 20 coopérant successivement avec la source lumineuse 24.

Sur les figures 1 et 3, le module 10 est orienté de manière à ce que le réflecteur 18 soit visible et orienté vers l'avant du véhicule. Le module 10 assure en conséquence dans cette configuration la fonction d'éclairage et/ou de signalisation réglementaire décrite ci-avant.

Sur les figures 2 et 4, le support 16 du module 10 a subi par rapport à la configuration des figures 1 et 3 une rotation de 180° dans l'exemple représenté, de manière à présenter la deuxième face 30 assurant ainsi la fonction d'aspect et/ou d'éclairage et/ou de signalisation décrite également ci-avant.

Dans la configuration représentée sur les figures 1 et 3, lorsque la source lumineuse 26 est allumée, elle émet des rayons lumineux en direction du réflecteur 18. Le réflecteur 18 renvoie les rayons lumineux vers l'avant du véhicule pour remplir la fonction d'éclairage et/ou de signalisation réglementaire. Sur leur trajectoire, les rayons lumineux traversent la face transparente 32 du guide de lumière en nappe 20.

La fonction d'éclairage peut également être directionnelle, c'est-à-dire du type DBL (Dynamic Bending Light), grâce à l'actionneur 12 du module 10. En d'autres termes, le module 10 peut non seulement assurer le changement de fonction d'éclairage et/ou de signalisation mais également assurer la fonction directionnelle de la fonction d'éclairage du module.

La source lumineuse 26 est de préférence du type diode à électroluminescence (LED), et elle est sensiblement alignée sur l'axe 14. On entend par l'expression « sensiblement alignée » que la distance entre le centre géométrique de la LED 26 et l'axe de rotation du support 16 n'est pas supérieure aux dimensions de la LED 26.

La source lumineuse 24 peut être aussi allumée en plus de la source lumineuse 26 afin que la partie périphérique 34 de la face 32 émette de la lumière. Cela permet d'utiliser le guide de lumière 20 en complément du réflecteur 18.

En revanche lorsque la fonction d'éclairage et/ou de signalisation assurée par le réflecteur 18 n'est pas utilisée, le module adopte automatiquement ou sur commande la configuration représentée sur les figures 2 et 4. La face d'aspect 30 est alors visible à travers la face du guide 36. La source lumineuse 24 peut être aussi allumée afin que la partie périphérique 38 de la face 30 émette de la lumière pour remplir une fonction de signalisation et/ou d'aspect.

Le module 10 passe de la configuration illustrée sur les figures 1 et 3, à la configuration illustrée sur les figures 2 et 4 et réciproquement par un mouvement de rotation du support 16 accompagné du guide de lumière 20. Le mouvement est généré par l'actionneur 12 par l'intermédiaire de l'axe 14 et du pivot 28.

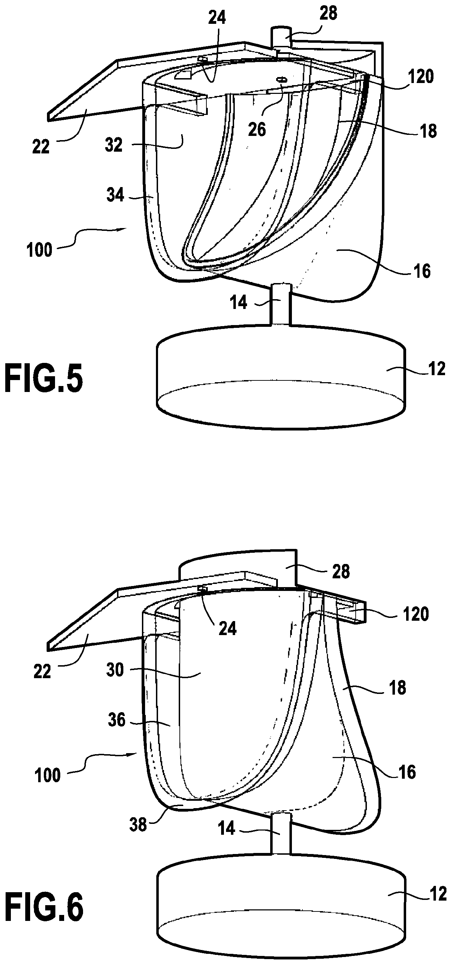

Les figures 5 et 6 illustrent le principe de l'invention et correspondent à une variante de réalisation. Elles illustrent de manière schématique un module d'éclairage et/ou de signalisation 100, fixé dans un boitier (non représenté) d'un projecteur, comprenant un actionneur 12 solidaire du boitier, un axe 14 entrainé en rotation par l'actionneur 12 et solidaire d'un support 16. Dans cette variante de réalisation, le guide de lumière 20 est constitué d'une seule face 32 coopérant avec la source lumineuse 24. De ce fait, le guide de lumière est fixe, par exemple en étant solidaire du circuit imprimé 22.

Le guide de lumière est de préférence un guide de lumière en nappe. Dans un mode de réalisation préféré, la partie périphérique 34 du guide en nappe renvoie la lumière de la deuxième source lumineuse 24 vers l'avant du véhicule pour remplir une fonction de signalisation et/ou vers l'arrière pour participer à la fonction d'aspect.

Sur la figure 5, le module 100 est orienté de manière à ce que le réflecteur 18 soit visible et orienté vers l'avant du véhicule. Le module 100 assure en conséquence dans cette configuration la fonction d'éclairage et/ou de signalisation réglementaire décrite ci-avant.

Sur la figure 6, le support 16 du module 100 a subi par rapport à la configuration de la figure 6 une rotation de 180° dans l'exemple représenté, de manière à présenter la deuxième face 30 du support 16 assurant ainsi la fonction d'aspect et/ou d'éclairage et/ou de signalisation décrite également ci-avant.

Dans la configuration représentée sur la figure 5, lorsque la source lumineuse 26 est allumée, elle émet des rayons lumineux en direction du réflecteur 18. Le réflecteur renvoie les rayons lumineux vers l'avant du véhicule pour remplir une fonction d'éclairage et/ou de signalisation réglementaire. Sur leur trajectoire, les rayons lumineux traversent la face transparente 32 du guide de lumière en nappe 120.

La fonction d'éclairage peut également être directionnelle, c'est-à-dire du type DBL (Dynamic Bending Light), grâce à l'actionneur 12 du module 100. En d'autres termes, le module 100 peut non seulement assurer le changement de fonction d'éclairage et/ou de signalisation mais également assurer la fonction directionnelle de la fonction d'éclairage du module. La source lumineuse 26 est de préférence du type diode à électroluminescence (LED), et elle est sensiblement alignée sur l'axe 14. On entend par l'expression « sensiblement alignée » que la distance entre le centre géométrique de la LED 26 et l'axe de rotation du support 16 n'est pas supérieure aux dimensions de la LED 26.

La source lumineuse 24 peut être aussi allumée en plus de la source lumineuse 26 afin que la partie périphérique 34 du guide de lumière 120 émette de la lumière. Cela permet d'utiliser le guide de lumière 120 en complément du réflecteur 18.

En revanche lorsque la fonction d'éclairage et/ou de signalisation assurée par le réflecteur 18 n'est pas utilisée, le module adopte automatiquement ou sur commande la configuration représentée sur la figure 6. La face d'aspect 30 est alors visible à travers la face 32 du guide de lumière 120. La source lumineuse 24 peut être aussi allumée afin que la partie périphérique 34 de la face 30 émette de la lumière pour remplir une fonction de signalisation et/ou d'aspect.

Le module 100 passe de la configuration illustrée sur la figure 5, à la configuration illustrée sur la figure 6 et réciproquement par un mouvement de rotation du support 16. Le mouvement est généré par l'actionneur 12 par l'intermédiaire de l'axe 14 et du pivot 28. Quant au guide de lumière 120, il reste fixe par rapport au circuit imprimé 22 pendant la rotation du support 16.

Selon les deux variantes de réalisation, la fonction d'éclairage et/ou de signalisation du réflecteur et/ou la fonction de signalisation et/ou d'aspect du guide lumière peuvent être également utilisées pour créer une animation à l'allumage du véhicule aussi appelée « fonction de bienvenue », grâce aux moyens de déplacement en rotation 12 du module 10 et/ou du module 100. En d'autres termes, une animation lumineuse au niveau des projecteurs comprenant un ou plusieurs modules selon les variantes de l'invention s'effectuera en réponse à la commande de déverrouillage des portes et/ou au démarrage du moteur.

Bien entendu, l'invention n'est pas limitée à la description des exemples de réalisation ci-dessus, mais s'étend aux nombreuses variantes que l'homme du métier pourra lui apporter. C'est ainsi que par exemple que :
- le guide ne comporte pas de nappe centrale et est limité à un guide longitudinal au bord du réflecteur par exemple. Dans ce cas il pourra être prévu deux sources lumineuses, par exemple de type LED, une à chaque extrémité du guide longitudinal.
- la fonction de signalisation réglementaire du guide lumière selon l'invention peut également être accompagnée d'une fonction d'aspect, à savoir avec éclairage actif et/ou avec rétro éclairage à la manière d'un catadioptre,
- le projecteur peut comporter plusieurs modules identiques à celui qui a été décrit, chaque module possédant son moteur pour tourner de façon autonome,
- plusieurs modules ou tous les modules sont actionnés par un même moteur grâce à un système de bielle et/ou plusieurs étages de roues dentées,
- le guide de lumière de l'invention a un aspect glacé sur tout ou partie de sa surface pour la fonction d'aspect,
- le guide de lumière de l'invention a des motifs et/ou des inscriptions sur tout ou partie de sa surface pour la fonction d'aspect,
- les faisceaux générés par le ou les modules qui ont été décrits plus haut peuvent constituer des faisceaux complémentaires à des faisceaux réglementaires générés par des dispositifs conventionnels.
- les faisceaux générés par le ou les modules qui ont été décrits plus haut peuvent constituer ensemble des faisceaux réglementaires d'éclairage et/ou de signalisation.

## Revendications

1. Module d'éclairage et/ou de signalisation (10; 100) notamment pour véhicule automobile, comprenant :
- au moins une source lumineuse (26) ;
- au moins un réflecteur (18) ;
**caractérisé en ce que**
- le réflecteur (18) est mobile en rotation sous l'effet d'un actionneur (12), et **en ce que**
- la source lumineuse (26) est fixe par rapport à l'actionneur (12).

2. Module d'éclairage et/ou de signalisation (10; 100) selon la revendication 1, **caractérisé en ce que** le réflecteur (18) est mobile en rotation autour d'un axe (14).

3. Module d'éclairage et/ou de signalisation (10; 100) selon la revendication 2, **caractérisé en ce que** l'axe (14) est sensiblement vertical.

4. Module d'éclairage et/ou de signalisation (10 ; 100) selon l'une quelconque des revendications précédentes, **caractérisé en ce que** le réflecteur (18) et la source lumineuse (26) coopèrent pour remplir une fonction d'éclairage et/ou de signalisation réglementaire.

5. Module d'éclairage et/ou de signalisation (10 ; 100) selon l'une quelconque des revendications précédentes, **caractérisé en ce que** la source lumineuse (26) est sensiblement alignée avec l'axe (14).

6. Module d'éclairage et/ou de signalisation (10 ; 100) selon l'une quelconque des revendications précédentes, **caractérisé en ce que** le réflecteur (18) est formé sur une face d'un support (16) solidaire de l'axe (14).

7. Module d'éclairage et/ou de signalisation (10 ; 100) selon l'une quelconque des revendications précédentes, **caractérisé en ce que** le support (16) comporte au moins une deuxième face (30) remplissant une deuxième fonction.

8. Module d'éclairage et/ou de signalisation (10; 100) selon la revendication 7, **caractérisé en ce que** la deuxième fonction est une fonction d'éclairage et/ou de signalisation réglementaire.

9. Module d'éclairage et/ou de signalisation (10; 100) selon la revendication 7, **caractérisé en ce que** la deuxième fonction est une fonction d'aspect.

10. Module d'éclairage et/ou de signalisation (10 ; 100) selon l'une quelconque des revendications précédentes, **caractérisé en ce que** le module (10 ; 100) comprend au moins une deuxième source lumineuse (24).

11. Module d'éclairage et/ou de signalisation (10; 100) selon la revendication précédente, **caractérisé en ce que** la deuxième source lumineuse (24) coopère avec au moins un guide de lumière (20).

12. Module d'éclairage et/ou de signalisation (10; 100) selon la revendication 10, **caractérisé en ce que** la deuxième source lumineuse (24) coopère avec au moins une face (18, 30) du support (16).

13. Module d'éclairage et/ou de signalisation (10 ; 100) selon l'une quelconque des revendications 10 à 12, **caractérisé en ce que** la deuxième source lumineuse (24) est fixe par rapport à la première source lumineuse (26).

14. Module d'éclairage et/ou de signalisation (10) selon l'une quelconque des revendications 10 à 13, **caractérisé en ce que** le guide en nappe (20) est solidaire du support (16).

15. Module d'éclairage et/ou de signalisation (10) selon l'une quelconque des revendications 10 à 14, **caractérisé en ce que** le guide de lumière (20) est constitué par un guide en nappe dont la partie périphérique (34, 38) renvoie la lumière de la deuxième source lumineuse (24) pour remplir une fonction de signal.

16. Module d'éclairage et/ou de signalisation (100) selon l'une quelconque des revendications 1 à 13, **caractérisé en ce que** le guide en nappe (20) est fixe par rapport à la source lumineuse (24).

17. Module d'éclairage et/ou de signalisation (100) selon la revendication 16, **caractérisé en ce que** le guide de lumière (20) est constitué par un guide en nappe dont la partie périphérique (34) renvoie la lumière de la deuxième source pour remplir une fonction de signal.

18. Module d'éclairage et/ou de signalisation (10 ; 100) selon l'une quelconque des revendications précédentes, **caractérisé en ce que** la source lumineuse (26) est constituée par une diode électroluminescente (LED).

19. Module d'éclairage et/ou de signalisation (10 ; 100) selon l'une quelconque des revendications 9 à16, **caractérisé en ce que** la deuxième source lumineuse (24) est constituée par une diode électroluminescente (LED).

20. Projecteur d'éclairage et/ou de signalisation pour véhicule automobile, comprenant un boîtier et au moins un module d'éclairage et/ou de signalisation (10 ; 100), **caractérisé en ce que** le module d'éclairage et/ou de signalisation (10 ; 100) est conforme à l'une des revendications 1 à 19.

21. Projecteur d'éclairage et/ou de signalisation pour véhicule automobile, comprenant un boîtier et au moins un module d'éclairage et/ou de signalisation (10 ; 100) selon la revendication 20, **caractérisé en ce que** l'actionneur (12) est fixé au boitier.
